# EUROPEAN PATENT APPLICATION

(11) **EP 3 466 668 A1**
(43) Date of publication of application: **10.04.2019**
(21) Application number: 17806850.8
(22) Date of filing: 02.06.2017
(51) Int. Cl.: B32B 3/28, B32B 5/18, B32B 5/28, B32B 7/02

(54) **SHEET AND ROD-SHAPED MEMBER**

(30) Priority: 03.06.2016 JP 2016111977; 03.06.2016 JP 2016111978; 16.09.2016 JP 2016181411
(71) Applicant: Sekisui Chemical Co., Ltd., Osaka-shi, Osaka 530-8565 (JP)
(72) Inventor: NAKANO, Yoshinori, Kyoto-shi Kyoto 601-8105 (JP); NAKAMURA, Masanori, Kyoto-shi Kyoto 601-8105 (JP); NAKAJIMA, Setsuo, Tokyo 105-8450 (JP); KADOYAMA, Masakazu, Kyoto-shi Kyoto 601-8105 (JP); NAKATA, Yasushi, Kyoto-shi Kyoto 601-8105 (JP)
(74) Representative: Ter Meer Steinmeister & Partner
(86) International application number: PCT/JP2017/020712
(87) International publication number: WO 2017/209300

(57) **Abstract**

A sheet 1 of the present invention is a sheet including a first main surface 1a and a second main surface 2a having a plurality of protruding portions 2. The sheet 1 includes a first resin-impregnated fiber sheet 11, a second resin-impregnated fiber sheet 12, and a resin composition layer 13. The first resin-impregnated fiber sheet 11 forms the first main surface 1a. The second resin-impregnated fiber sheet 12 forms the second main surface 1b. The resin composition layer 13 fills space between the first resin-impregnated fiber sheet 11 and the second resin-impregnated fiber sheet 12. The melting viscosity of resin contained in the first and second resin-impregnated fiber sheets 11 and 12 at a temperature of 250°C and a shear rate of 100 s⁻¹ is lower than the melting viscosity of resin contained in the resin composition layer 13 under the same conditions.

## Description

### Technical Field

The present invention relates to a sheet having at least one protruding portion, and a rod-shaped member.

### Background Art

Carbon fiber composite materials, especially carbon fiber reinforced plastic (CFRP), are characterized by being light and very strong, and are thus used in members for aircrafts, automobiles, ships, sporting goods, windmill blades, and the like, and in other various industrial applications. Carbon fiber composite materials have a characteristic anisotropic luster due to the orientation of carbon fiber bundles included in the carbon fiber composite materials, and undergo further surface treatment such as coating to have a rich and stately external appearance, and have characteristics such as electrical conductivity, radiolucency, and electromagnetic wave shielding properties. In general, carbon fiber composite materials are used in the form of a laminated plate, a honeycomb sandwich plate, or the like in various industrial applications. However, a thermosetting resin is used as a matrix in most carbon fiber composite materials, and therefore, in order to mold such a type of carbon fiber composite material, a method using a resin curing reaction that requires a relatively long period of time for molding, in other words, a method that is not suitable for mass production, such as autoclave molding, has been used.

On the other hand, a large number of proposals regarding composite materials in which a thermoplastic resin is used as a matrix and molded articles made of such composite materials have been made. For example, in the technique disclosed in Patent Literature 1, a prepreg including reinforced fibers aligned in one direction and a thermoplastic resin, and a structural material using the prepreg are proposed.

Moreover, Patent Literature 2 discloses a resin sheet in which both surfaces are covered with a reinforced fiber resin sheet and a protruding portion is formed on one main surface, as a sheet that can be used in a windmill blade.

### Citation List

### Patent Literature

Patent Literature 1: Japanese Patent No. 4324649
Patent Literature 2: JP 2016-32929A

### Summary of Invention

### Technical Problem

However, a sheet including a protruding portion as disclosed in Patent Literature 2 is problematic in that, when the protruding portion is formed, the adhesion between the resin composition layer and the resin impregnated fiber sheet is insufficient, and the rigidity or shock resistance (impact resistance) deteriorates. In addition, a sheet including a protruding portion as disclosed in Patent Literature 2 has low flexibility, and is thus problematic in that, when the sheet is adhered to a curved portion such as a windmill blade, the fibers located on the protruding portion side are pulled strongly, and the overall rigidity or shock resistance of the member thus deteriorates.

It is a main object of the present invention to provide a sheet and a rod-shaped member that have excellent rigidity and excellent shock resistance.

### Solution to Problem

A first sheet according to the present invention is a sheet including a first main surface and a second main surface provided with at least one protruding portion, the sheet including:
a first resin-impregnated fiber sheet forming the first main surface;
a second resin-impregnated fiber sheet forming the second main surface; and
a resin composition layer filling space between the first resin-impregnated fiber sheet and the second resin-impregnated fiber sheet.

In one aspect of the first sheet, it is preferable that a melting viscosity of resin contained in the first and second resin-impregnated fiber sheets at a temperature of 250°C and a shear rate of 100 s⁻¹ is lower than a melting viscosity of resin contained in the resin composition layer under the same conditions.

In one aspect of the first sheet, it is preferable that the melting viscosity of the resin contained in the first and second resin-impregnated fiber sheets at a temperature of 250°C and a shear rate of 100 s⁻¹ is 300 Pa.s or more lower than the melting viscosity of the resin contained in the resin composition layer under the same conditions.

In one aspect of the first sheet, it is preferable that the plurality of protruding portions are formed extending in a first direction in a linear manner,
the first resin-impregnated fiber sheet includes:
first fibers extending in the first direction; and
second fibers extending in a second direction that is different from the first direction, and
a fiber density of the first fibers is higher than a fiber density of the second fibers.

In one aspect of the first sheet, it is preferable that, when the fiber density of the first fibers is taken as A and the fiber density of the second fibers is taken as B, A/B is 1.1 or more and 9.0 or less.

In the above-mentioned aspects of the first sheet, it is preferable that the second direction is orthogonal to the first direction.

In the above-mentioned aspects of the first sheet, it is preferable that resin contained in the first and second resin-impregnated fiber sheets includes at least one type of resin selected from the group consisting of polyethylene, polypropylene, a polypropylene copolymer, nylon resin, polymethacrylic resin, polyvinyl chloride resin, and polycarbonate resin, and
resin contained in the resin composition layer includes at least one type of resin selected from the group consisting of polyethylene, polypropylene, a polypropylene copolymer, nylon resin, polymethacrylic resin, polycarbonate resin, and polyvinyl chloride resin.

In the above-mentioned aspects of the first sheet, it is preferable that the second resin-impregnated fiber sheet contains fibers extending in the first direction.

In the above-mentioned aspects of the first sheet, it is preferable that the second resin-impregnated fiber sheet contains fibers extending in the second direction.

It is preferable that the above-mentioned aspects of the first sheet are light transmissive.

In the above-mentioned aspects of the first sheet, it is preferable that the resin composition layer contains fibers.

In the above-mentioned aspects of the first sheet, it is preferable that the first and second resin-impregnated fiber sheets contain a thermoplastic resin.

In the above-mentioned aspects of the first sheet, it is preferable that at least a portion of the resin composition layer that is located inside the protruding portion is formed of foam.

A second sheet according to the present invention is a sheet including a first main surface and a second main surface provided with a plurality of protruding portions. The sheet according to the present invention includes a first resin-impregnated fiber sheet, a second resin-impregnated fiber sheet, and a resin composition layer. The first resin-impregnated fiber sheet forms the first main surface. The second resin-impregnated fiber sheet forms the second main surface. The resin composition layer fills space between the first resin-impregnated fiber sheet and the second resin-impregnated fiber sheet. A melting viscosity of the resin contained in the first and second resin-impregnated fiber sheets at a temperature of 250°C and a shear rate of 100 s⁻¹ is lower than a melting viscosity of the resin contained in the resin composition layer under the same conditions.

It should be noted that, in the present invention, the "resin composition" only includes resin.

In one aspect of the second sheet according to the present invention, it is preferable that the melting viscosity of the resin contained in the first and second resin-impregnated fiber sheets at a temperature of 250°C and a shear rate of 100 s⁻¹ is 300 Pa.s or more lower than the melting viscosity of the resin contained in the resin composition layer.

In one aspect of the second sheet according to the present invention, it is preferable that the resin contained in the first and second resin-impregnated fiber sheets includes at least one type of resin selected from the group consisting of polyethylene, polypropylene, a polypropylene copolymer, nylon resin, polymethacrylic resin, and polycarbonate resin. It is preferable that the resin contained in the resin composition layer includes at least one type of resin selected from the group consisting of polyethylene, polypropylene, a polypropylene copolymer, nylon resin, polymethacrylic resin, polycarbonate resin, and polyvinyl chloride resin.

In one aspect of the second sheet according to the present invention, it is preferable that the first resin-impregnated fiber sheet contains a plurality of fibers extending in directions that are different from one another.

In one aspect of the second sheet according to the present invention, it is preferable that the protruding portions are constituted by linear protruding portions extending in a first direction, and the second resin-impregnated fiber sheet contains a plurality of fibers extending in the first direction.

In one aspect of the second sheet according to the present invention, it is preferable that the fibers contained in the second resin-impregnated fiber sheet extend in the first

### direction.

In one aspect of the second sheet according to the present invention, it is preferable that the first and second resin-impregnated fiber sheets and the resin composition layer are light transmissive.

It should be noted that, in the present invention, "light transmissive" means that the average light transmittance within a visible wavelength range (450 nm to 650 nm) is 30% or more.

In one aspect of the second sheet according to the present invention, it is preferable that the resin composition layer contains fibers.

In one aspect of the second sheet according to the present invention, it is preferable that the protruding portions are constituted by the linear protruding portions extending in the first direction, and the sheet according to the present invention further includes foam arranged between the linear protruding portions adjacent to each other in the first direction to be in contact with the linear protruding portions.

In one aspect of the second sheet according to the present invention, it is preferable that the foam includes closed cells.

In one aspect of the second sheet according to the present invention, it is preferable that the foam includes at least one type of resin selected from the group consisting of polyethylene foam, polypropylene foam, polystyrene foam, polyurethane foam, and polyacrylic foam.

In one aspect of the second sheet according to the present invention, cavities may be formed in portions of the resin composition layer that are located inside the protruding portions.

In one aspect of the second sheet according to the present invention, the protruding portions may be constituted by the linear protruding portions extending in the first direction, and the cavities may have an elongated shape extending in the first direction.

In one aspect of the second sheet according to the present invention, the cavities may be provided passing through the linear protruding portions from one end to the other end in the first direction.

In one aspect of the second sheet according to the present invention, the protruding portions may form a lattice in a plan view.

One aspect of the second sheet according to the present invention may have flexibility.

In one aspect of the second sheet according to the present invention, the first and second resin-impregnated fiber sheets may contain a thermoplastic resin.

In one aspect of the second sheet, it is preferable that at least portions of the resin composition layer that are located inside the protruding portions are formed of foam.

The second sheet according to the present invention may be used as a water sealing plate, a windmill blade, or a structural member for a ship.

In some applications, a sheet including a protruding portion as disclosed in Patent Literature 2 above is required to be capable of being rolled up. The reason for this is that, if the sheet can be rolled up, the sheet can be used, stored, or accommodated in a rolled-up state, for example. It is a main object of a third sheet of the present invention to provide a sheet that has high rigidity in the first direction and can be rolled up.

A third sheet according to the present invention is a sheet including a first main surface and a second main surface provided with a plurality of linear protruding portions extending in a first direction. The sheet according to the present invention includes a first resin-impregnated fiber sheet, a second resin-impregnated fiber sheet, and a resin composition layer. The first resin-impregnated fiber sheet forms the first main surface. The second resin-impregnated fiber sheet forms the second main surface. The resin composition layer fills space between the first resin-impregnated fiber sheet and the second resin-impregnated fiber sheet. The first resin-impregnated fiber sheet contains first fibers and second fibers. The first fibers extend in the first direction. The second fibers extend in a second direction that is different from the first direction. A fiber density of the first fibers is higher than a fiber density of the second fibers.

In one aspect of the third sheet according to the present invention, it is preferable that, when the fiber density of the first fibers is taken as A and the fiber density of the second fibers is taken as B, A/B is 1.1 or more and 9.0 or less.

It should be noted that, in the present invention, the "resin composition" only includes resin.

In one aspect of the third sheet according to the present invention, it is preferable that the first resin-impregnated fiber sheet is constituted by one of a unidirectional woven fabric, a plain woven fabric, a twill woven fabric, or a sateen woven fabric impregnated with resin.

In one aspect of the third sheet according to the present invention, it is preferable that the second direction is orthogonal to the first direction.

In one aspect of the third sheet according to the present invention, it is preferable that the second resin-impregnated fiber sheet contains fibers extending in the first direction.

In one aspect of the third sheet according to the present invention, it is preferable that the second resin-impregnated fiber sheet is constituted by a unidirectional woven fabric impregnated with resin.

In one aspect of the third sheet according to the present invention, it is preferable that the second resin-impregnated fiber sheet contains fibers extending in the second direction.

In one aspect of the third sheet according to the present invention, it is preferable that the resin contained in the first and second resin-impregnated fiber sheets includes at least one type of resin selected from the group consisting of polyethylene, polypropylene, a polypropylene copolymer, nylon resin, polymethacrylic resin, polyvinyl chloride resin, and polycarbonate resin, and the resin contained in the resin composition layer includes at least one type of resin selected from the group consisting of polyethylene, polypropylene, a polypropylene copolymer, nylon resin, polymethacrylic resin, polyvinyl chloride resin, and polycarbonate resin.

It is preferable that one aspect of the third sheet according to the present invention is light transmissive.

It should be noted that, in the present invention, "light transmissive" means that the average light transmittance within a visible wavelength range (450 nm to 650 nm) is 30% or more.

In one aspect of the third sheet according to the present invention, it is preferable that the resin composition layer contains fibers.

In one aspect of the third sheet according to the present invention, the first and second resin-impregnated fiber sheets may contain a thermoplastic resin.

In one aspect of the third sheet, it is preferable that at least portions of the resin composition layer that are located inside the linear protruding portions are formed of foam.

The third sheet according to the present invention may be used as a water sealing plate.

It is conceivable that, as a method for reinforcing a resin sheet, rod-shaped beams are joined to the resin sheet as disclosed in Patent Literature 1 above instead of providing linear protruding portions on one main surface of the resin sheet. A rod-shaped member that can be used as such a beam is sometimes required to have high shock resistance.

It is a main object of a rod-shaped member according to the present invention to provide a rod-shaped member with excellent shock resistance.

A rod-shaped member according to the present invention includes a rod-shaped main body and a resin-impregnated fiber sheet. The main body includes an installation surface on a lateral side. The main body is made of a resin composition. The resin impregnated fiber sheet is joined to at least one lateral side of the main body other than the installation surface. A melting viscosity of resin contained in the resin-impregnated fiber sheet at a temperature of 250°C and a shear rate of 100 s⁻¹ is lower than a melting viscosity of resin contained in the main body under the same conditions.

It should be noted that, in the present invention, the "resin composition" only includes resin.

In one aspect of the rod-shaped member according to the present invention, it is preferable that a melting viscosity of the resin contained in the resin-impregnated fiber sheet at a temperature of 250°C and a shear rate of 100 s⁻¹ is 300 Pa.s or more lower than a melting viscosity of the resin contained in the main body under the same conditions.

In one aspect of the rod-shaped member according to the present invention, the resin-impregnated fiber sheet may be joined to all of the lateral sides of the main body other than the installation surface.

In one aspect of the rod-shaped member according to the present invention, it is preferable that the main body has a prismatic shape having a rectangular lateral cross section, and the resin-impregnated fiber sheet is joined to three of the four lateral sides of the main body other than the lateral side forming the installation surface. In this case, it is preferable that a single resin-impregnated fiber sheet is joined to three lateral sides.

In one aspect of the rod-shaped member according to the present invention, a cross section of the main body may have a dome shape, and the resin-impregnated fiber sheet may be joined to a portion of the lateral sides of the main body other than the installation surface. In this case, it is preferable that the resin-impregnated fiber sheet is joined between a portion on one side and a portion on the other side with respect to the top of the main body in a width direction, as viewed in a direction in which the main body extends.

In one aspect of the rod-shaped member according to the present invention, it is preferable that the resin contained in the resin-impregnated fiber sheet includes at least one type of resin selected from the group consisting of polyethylene, polypropylene, a polypropylene copolymer, nylon resin, polymethacrylic resin, and polycarbonate resin. It is preferable that the resin contained in the main body includes at least one type of resin selected from the group consisting of polyethylene, polypropylene, a polypropylene copolymer, nylon resin, polymethacrylic resin, polycarbonate resin, and polyvinyl chloride resin.

In one aspect of the rod-shaped member according to the present invention, it is preferable that the resin-impregnated fiber sheet contains a plurality of fibers extending in a direction in which the main body extends.

In one aspect of the rod-shaped member according to the present invention, the resin-impregnated fiber sheet and the main body may be light transmissive.

It should be noted that, in the present invention, "light transmissive" means that the average light transmittance within a visible wavelength range (450 nm to 650 nm) is 30% or more.

In one aspect of the rod-shaped member according to the present invention, it is preferable that the main body contains fibers.

In one aspect of the rod-shaped member according to the present invention, a cavity may be formed. In this case, it is preferable that the cavity has an elongated shape extending in a direction in which the main body extends. The cavity may be provided passing through the main body from one end to the other end in the direction in which the main body extends.

In one aspect of the rod-shaped member according to the present invention, it is preferable that the resin-impregnated fiber sheet contains a thermoplastic resin.

In one aspect of the rod-shaped member according to the present invention, the main body is formed of foam.

One aspect of the rod-shaped member according to the present invention may be used as a beam.

### Advantageous Effects of the Invention

With the present invention, a sheet with excellent rigidity or excellent shock resistance can be provided.

### Brief Description of Drawings

FIG. 1 is a schematic perspective view of a first embodiment of a sheet of the present invention.
FIG. 2 is a schematic cross-sectional view taken along line II-II in FIG. 1.
FIG. 3 is a schematic perspective view of a second embodiment of a sheet of the present invention.
FIG. 4 is a schematic cross-sectional view taken along line IV-IV in FIG. 3.
FIG. 5 is a schematic plan view of a third embodiment of a sheet of the present invention.
FIG. 6 is a schematic perspective view of a fourth embodiment of a sheet of the present invention.
FIG. 7 is a schematic cross-sectional view taken along line VII-VII in FIG. 6.
FIG. 8 is a schematic perspective view of a fifth embodiment of a sheet of the present invention.
FIG. 9 is a schematic cross-sectional view taken along line IX-IX in FIG. 8.
FIG. 10 is a schematic perspective view of a first embodiment of a rod-shaped member of the present invention.
FIG. 11 is a schematic cross-sectional view taken along line II-II in FIG. 10.
FIG. 12 is a schematic perspective view of a second embodiment of a rod-shaped member of the present invention.
FIG. 13 is a schematic perspective view of a third embodiment of a rod-shaped member of the present invention.
FIG. 14 is a schematic perspective view of a fourth embodiment of a rod-shaped member of the present invention.
FIG. 15 is a schematic cross-sectional view taken along line VI-VI in FIG. 5.
FIG. 16 is a schematic perspective view of a fifth embodiment of a rod-shaped member of the present invention.
FIG. 17 is a schematic cross-sectional view taken along line VIII-VIII in FIG. 7.

### Description of Embodiments

### A. Sheet

Hereinafter, favorable embodiments of a sheet of the present invention will be described. However, the following embodiments are merely examples. The present invention is not limited to the following embodiments.

In the diagrams that are referred to in the following embodiments and the like, members having substantially the same function are denoted by the same reference numeral, and description thereof may be omitted. The diagrams that are referred to in the embodiments and the like are shown schematically. The ratios of the dimensions of the articles shown in the diagrams may be different from the ratios of the dimensions of the actual articles. The ratios of the dimensions of the articles shown in the diagrams may be different from one another. Specific ratios of the dimensions of the articles should be determined in consideration of the following description.

### 1. First embodiment

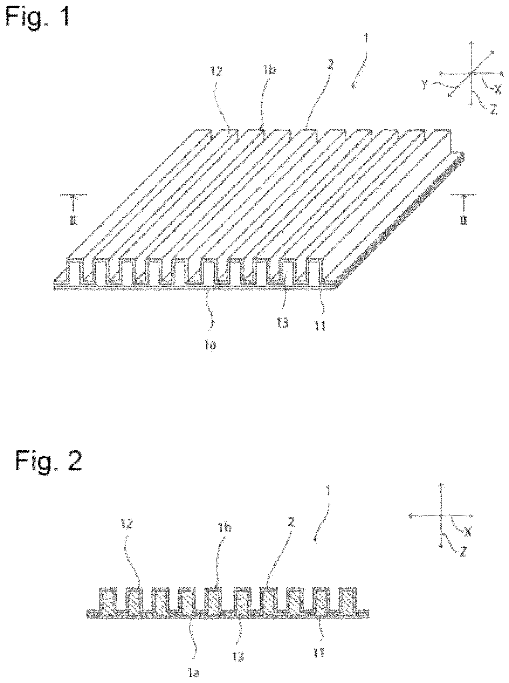

FIG. 1 is a schematic perspective view of a sheet according to a first embodiment. FIG. 2 is a schematic cross-sectional view taken along line II-II in FIG. 1.

A sheet 1 shown in FIGS. 1 and 2 is a sheet that can be used as a water sealing plate and the like, for example.

The sheet 1 includes a first main surface 1a and a second main surface 1b. The first main surface 1a is flat, whereas the second main surface 1b is provided with a plurality of protruding portions 2. Each of the plurality of protruding portions 2 is a linear protruding portion extending in a y axis direction. Each of the plurality of protruding portions 2 is provided extending from one end of the second main surface 1b to the other end in the y axis direction. Therefore, the sheet 1 has substantially no flexibility in the y axis direction and has high rigidity in the y axis direction. On the other hand, the sheet 1 has flexibility in an x axis direction that is orthogonal to the y axis direction. As a result, the sheet 1 can be rolled up around an axis extending in the y axis direction. Accordingly, the sheet 1 can also be stored in a rolled-up state, for example.

As shown in FIG. 2, the sheet 1 includes a first resin-impregnated fiber sheet 11, a second resin-impregnated fiber sheet 12, and a resin composition layer 13. The first resin-impregnated fiber sheet 11 forms the first main surface 1a. The second resin-impregnated fiber sheet 12 forms the second main surface 1b. The resin composition layer 13 is arranged between the first resin-impregnated fiber sheet 11 and the second resin-impregnated fiber sheet 12. The resin composition layer 13 fills space between the first resin-impregnated fiber sheet 11 and the second resin-impregnated fiber sheet 12. That is, in this embodiment, substantially no space is present between the first resin-impregnated fiber sheet 11 and the second resin-impregnated fiber sheet 12. The individual members will be described below.

### 1-1. First resin-impregnated fiber sheet 11

The first resin-impregnated fiber sheet 11 is a fiber sheet impregnated with resin. There is no particular limitation on the fiber sheet used as the first resin-impregnated fiber sheet 11 as long as a sheet containing fibers is used.

Although there is no particular limitation on the fibers contained in the fiber sheet used as the first resin-impregnated fiber sheet 11, examples thereof include carbon fibers, glass fibers, polyester fibers, and nylon fibers, and carbon fibers are preferably used from a viewpoint of the rigidity of the sheet.

The fiber sheet used as the first resin-impregnated fiber sheet 11 is in the form of a woven fabric (woven cloth), a non-woven fabric, or a fiber bundle, for example. In particular, a woven fabric is preferable from the viewpoint of improving the rigidity. Although there is no particular limitation on the woven fabric, a plain woven fabric, a twill woven fabric, a sateen woven fabric, a unidirectional woven fabric, or the like may be used as the woven fabric, for example.

The fibers used in the above-mentioned fiber bundle or woven fabric preferably have an average fiber diameter of 6 µm or more and 27 µm or less. The above-mentioned average fiber diameter can be determined by averaging fiber diameters (maximum diameters) at 10 or more random positions.

There is no particular limitation on the number of fibers used in the above-mentioned fiber bundle or woven fabric. The number of fibers in the fiber bundle is preferably 1000 or more and 50000 or less. When carbon fibers are used as the material of the fiber bundle, the number of fibers in the fiber bundle is preferably 1000 or more and 50000 or less. When glass fibers are used as the material of the fiber bundle, the number of fibers in the fiber bundle is preferably 1000 or more and 20000 or less.

The weight per unit area (1 m square in general) is used as one of the indices for the properties of a fiber sheet, and this property is expressed as a basis weight. The fiber sheet preferably has a basis weight of 100 g/m² or more and 400 g/m² or less. When the basis weight is greater than or equal to the above-mentioned lower limit, the strength of the fiber bundle is further improved. When the basis weight is smaller than or equal to the above-mentioned upper limit, the resin impregnation property is further improved.

Tension is applied to the fibers included in the fiber bundle, and the woven fabric. When tension is applied to the fibers, the distance between the fibers tends to decrease. Therefore, it is preferable to perform processing for increasing the distance between the fibers in the fiber bundle. It is preferable that the above-mentioned fiber bundle contains spacer particles for increasing the distance between the fibers. When the distance between the fibers is increased in this manner, it is easy to perform impregnation with resin even in the case where high tension is applied to the fibers, due to the distance between the fibers being increased in advance. In addition, when tension is applied to the fibers, the distance between the fibers is less likely to decrease.

There is no particular limitation on the material of the above-mentioned spacer particles. It is preferable that the material of the spacer particles does not undergo excessive deformation due to the temperature or pressure during impregnation.

It is preferable to use naphthoxazine resin as the material of the above-mentioned spacer particles. Naphthoxazine resin is easily carbonized and is thus less likely to become excessively soft even when high temperatures or high pressure is applied. Therefore, the distance between the fibers is sufficiently ensured, and the resin impregnation properties are further improved.

The above-mentioned spacer particles are preferably naphthoxazine resin particles or inorganic particles. The spacer particles are preferably inorganic particles, and more preferably inorganic particles other than metal particles. The size of the inorganic particles may be adjusted to be suitable as a spacer by performing processing such as salting-out on a dispersion of the inorganic particles in a colloidal state to form aggregates of the particles.

From the viewpoint of further improving the rigidity of the sheet 1 in the y axis direction, it is preferable that the fiber sheet used as the first resin-impregnated fiber sheet 11 contains a plurality of fibers extending in the y axis direction, which is the extension direction of the protruding portions 2. It is preferable that the fibers contained in the fiber sheet used as the first resin-impregnated fiber sheet 11 extend in the y axis direction, which is the extension direction of the protruding portions 2.

From the viewpoint of improving the strength of the sheet 1 in the x axis direction and the y axis direction, it is preferable that the first resin-impregnated fiber sheet 11 contains a plurality of fibers extending in directions that are different from one another. For example, it is preferable that the first resin-impregnated fiber sheet 11 contains a plurality of fibers extending in the x axis direction and a plurality of fibers extending in the y axis direction.

Although there is no particular limitation on the resin with which the first resin-impregnated fiber sheet 11 is impregnated, the resin may be a cured product of a thermosetting resin or a thermoplastic resin. In particular, it is preferable that the first resin-impregnated fiber sheet 11 is impregnated with a thermoplastic resin. When a configuration is applied in which the first resin-impregnated fiber sheet 11 is impregnated with a thermoplastic resin, shock resistance is more likely to improve.

When a cured product of a thermosetting resin is used as the resin with which the first resin-impregnated fiber sheet 11 is impregnated, it is preferable that the first resin-impregnated fiber sheet 11 is impregnated with a resin such as urethane resin, vinyl ester resin, or epoxy resin. When a thermoplastic resin is used as the resin with which the first resin-impregnated fiber sheet 11 is impregnated, examples of the resin with which the first resin-impregnated fiber sheet 11 is impregnated include polyethylene resin, polypropylene resin, a polypropylene copolymer, nylon resin, polymethacrylic resin, polyvinyl chloride resin, and polycarbonate resin, and polypropylene resin or a polypropylene copolymer is preferably used. These types of resins may be used alone as the resin with which the first resin-impregnated fiber sheet 11 is impregnated, or a mixture of a plurality of types of resins may be used.

### 1-2. Second resin-impregnated fiber sheet 12

The second resin-impregnated fiber sheet 12 is a fiber sheet impregnated with resin. There is no particular limitation on the fiber sheet used as the second resin-impregnated fiber sheet 12 as long as a sheet containing fibers is used.

Although there is no particular limitation on the fibers contained in the fiber sheet used as the second resin-impregnated fiber sheet 12, examples thereof include carbon fibers, glass fibers, polyester fibers, and nylon fibers, and carbon fibers are preferably used from a viewpoint of the rigidity of the sheet.

The fiber sheet used as the second resin-impregnated fiber sheet 12 is in the form of a woven fabric (woven cloth), a non-woven fabric, or a fiber bundle, for example. In particular, a woven fabric is preferable from the viewpoint of improving the rigidity. Although there is no particular limitation on the woven fabric, a plain woven fabric, a twill woven fabric, a sateen woven fabric, a unidirectional woven fabric, or the like may be used as the woven fabric, for example.

In addition, the fibers used in a fiber bundle or a woven fabric, the physical properties of the fibers, the physical properties of the fiber sheet, the spacer particles, and the like, for example, are the same as those in the first resin-impregnated fiber sheet 11.

A method for manufacturing the sheet 1 will be specifically described later. When the sheet 1 is manufactured through press molding, for example, it is preferable to use, as the second resin-impregnated fiber sheet 12, a unidirectional woven fabric containing fibers extending in the y axis direction, which is the extension direction of the linear protruding portions 2. In this case, it is preferable to use fibers made of a thermoplastic resin, such as polyethylene fibers or polypropylene fibers, for a small amount of weft yarns that are used in a unidirectional woven fabric. When a unidirectional woven fabric using weft yarns made of such a resin is used, the unidirectional woven fabric is likely to deform during heat press molding. Therefore, press molding can be easily performed. When the sheet 1 is manufactured through extrusion molding, for example, the second resin-impregnated fiber sheet 12 may be constituted by a unidirectional woven fabric, or a plain woven fabric, a twill woven fabric, a sateen woven fabric or the like that contains fibers extending in the x axis direction.

From the viewpoint of further improving the rigidity of the sheet 1 in the y axis direction, it is preferable that the fiber sheet used as the second resin-impregnated fiber sheet 12 contains a plurality of fibers extending in the y axis direction, which is the extension direction of the protruding portions 2. It is preferable that the fibers contained in the fiber sheet used as the second resin-impregnated fiber sheet 12 extend in the y axis direction, which is the extension direction of the protruding portions 2.

From the viewpoint of improving the strength of the sheet 1 in the x axis direction and the y axis direction, it is preferable that the second resin-impregnated fiber sheet 12 contains a plurality of fibers extending in directions that are different from one another. For example, it is preferable that the second resin-impregnated fiber sheet 12 contains a plurality of fibers extending in the x axis direction and a plurality of fibers extending in the y axis direction.

It will be appreciated that the second resin-impregnated fiber sheet 12 preferably contains fibers extending in the y axis direction from the viewpoint of improving the flexibility of the sheet 1 in the x axis direction. It is more preferable that the fibers contained in the second resin-impregnated fiber sheet 12 extend in the y axis direction. It is more preferable to use a unidirectional woven fabric containing a plurality of fibers extending in the y axis direction as the second resin-impregnated fiber sheet 12, for example.

Although there is no particular limitation on the fibers contained in the fiber sheet used as the second resin-impregnated fiber sheet 12, examples thereof include glass fibers and carbon fibers.

Although there is no particular limitation on the resin with which the second resin-impregnated fiber sheet 12 is impregnated, the resin may be a cured product of a thermosetting resin or a thermoplastic resin. In particular, it is preferable that the second resin-impregnated fiber sheet 12 is impregnated with a thermoplastic resin. When a configuration is applied in which the second resin-impregnated fiber sheet 12 is impregnated with a thermoplastic resin, shock resistance can be improved.

When a cured product of a thermosetting resin is used as the resin with which the second resin-impregnated fiber sheet 12 is impregnated, it is preferable that the second resin-impregnated fiber sheet 12 is impregnated with a resin such as polyurethane resin, vinyl ester resin, or epoxy resin. When a thermoplastic resin is used as the resin with which the second resin-impregnated fiber sheet 12 is impregnated, it is preferable that the second resin-impregnated fiber sheet 12 is impregnated with a resin such as polyethylene resin, polypropylene resin, nylon resin, or polymethacrylic resin. These types of resins may be used alone as the resin with which the second resin-impregnated fiber sheet 12 is impregnated, or a mixture of a plurality of types of resins may be used.

### 1-3. Resin composition layer 13

The resin composition layer 13 fills space between the first resin-impregnated fiber sheet 11 and the second resin-impregnated fiber sheet 12. The resin composition layer 13 is joined to the first resin-impregnated fiber sheet 11 and the second resin-impregnated fiber sheet 12. The resin composition layer 13 may be made of only resin or a resin composition containing fibers, a filler, and the like. When the resin composition layer 13 contains fibers and a filler, the resin composition layer 13 can be provided with various functions. For example, when the resin composition layer 13 contains chopped fibers or the like, the strength of the resin composition layer 13 can be improved, and the strength of the sheet 1 can be thus improved. For example, when the resin composition layer 13 contains a plurality of fibers extending in random directions, the rigidity of the sheet 1 can be improved in both the x axis direction and the y axis direction. It should be noted that fibers obtained when pieces of the resin-impregnated fiber sheets 11 and 12 are chopped into fine pieces may be used as the chopped fibers, for example.

Although there is no particular limitation on the resin contained in the resin composition layer 13, examples thereof include polyethylene resin, polypropylene resin, a polypropylene copolymer, nylon resin, polymethacrylic resin, polyvinyl chloride resin, and polycarbonate resin, and it is preferable to use polypropylene resin or a polypropylene copolymer from the viewpoint of shock resistance. These types of resins may be used alone as the resin contained in the resin composition layer 13, or a mixture of a plurality of types of resins may be used.

The resin composition layer 13 may be provided only inside the protruding portions 2, or provided inside the protruding portions 2 as well as between the first resin-impregnated fiber sheet 11 and the second resin-impregnated fiber sheet 12 at portions between the protruding portions 2 adjacent in the x axis direction. In other words, at portions between the protruding portions 2 adjacent in the x axis direction, the first resin-impregnated fiber sheet 11 and the second resin-impregnated fiber sheet 12 may be in contact with each other, or the resin composition layer 13 may be provided between the first resin-impregnated fiber sheet 11 and the second resin-impregnated fiber sheet 12.

The above-described first resin-impregnated fiber sheet 11, second resin-impregnated fiber sheet 12, and resin composition layer 13 may be light transmissive. In this case, a light transmissive sheet 1 can be obtained. The light transmissive sheet 1 is favorably used at positions at which lighting is required and the like, for example.

### 1-4. Method for manufacturing sheet 1

Various methods can be used to manufacture the sheet 1. For example, the sheet 1 can be manufactured by layering the first resin-impregnated fiber sheet 11, the resin sheet for forming the resin composition layer 13, and the second resin-impregnated fiber sheet 12, and heat pressing them in this state. Moreover, a laminate can be manufactured by extruding the resin composition layer 13, in a sheet-like shape, into space between the first resin-impregnated fiber sheet 11 and the second resin-impregnated fiber sheet 12 using an extruder and sandwiching it therebetween. When the sheet 1 is manufactured through heat pressing, extrusion molding, or the like, the resin sheet for forming the resin composition layer 13 needs to be melted temporarily, and therefore, the resin sheet needs to be heated to a temperature that is higher than or equal to a temperature at which the resin sheet melts. The temperature at which the resin sheet melts varies depending on the material of the resin sheet, and, in general, it is preferable to heat the resin sheet to about 250°C during molding.

### 1-5. Features

With the sheet as mentioned above, space is sometimes formed inside the protruding portions, or the shock resistance of the obtained sheet sometimes deteriorates when the adhesion between the resin-impregnated fiber sheets and the resin composition layer is low. To address this, the sheet according to this embodiment is configured as described below.

In this embodiment, it is preferable that the melting viscosity of the resin contained in the first and second resin-impregnated fiber sheets 11 and 12 at a temperature of 250°C and a shear rate of 100 s⁻¹ is lower than the melting viscosity of the resin contained in the resin composition layer 13 under the same conditions (i.e., melting viscosity at a temperature of 250°C and a shear rate of 100 s⁻¹). In this case, the adhesion between the resin-impregnated fiber sheets 11 and 12 and the resin composition layer 13 can be improved, and space or the like is less likely to be formed inside the resin composition layer 13. Therefore, a sheet 1 with excellent shock resistance can be realized.

From the viewpoint of further improving the shock resistance of the sheet 1, the melting viscosity of the resin contained in the first and second resin-impregnated fiber sheets 11 and 12 at a temperature of 250°C and a shear rate of 100 s⁻¹ is preferably 300 Pa.S or more and more preferably 500 Pa.S or more lower than the melting viscosity of the resin contained in the resin composition layer 13 under the same conditions . However, if the melting viscosity of the resin contained in the first and second resin-impregnated fiber sheets 11 and 12 at a temperature of 250°C and a shear rate of 100 s⁻¹ is excessively lower than the melting viscosity of the resin contained in the resin composition layer 13 under the same conditions, the shock resistance of the manufactured sheet 1 may deteriorate. Therefore, the melting viscosity of the resin contained in the first and second resin-impregnated fiber sheets 11 and 12 at a temperature of 250°C and a shear rate of 100 s⁻¹ is preferably 100 Pa.S or more, and more preferably 200 Pa.S or more. On the other hand, the upper limit is preferably 600 Pa.S or less, more preferably 400 Pa.S or less, and even more preferably 300 Pa.S or less.

The melting viscosity of the resin contained in the resin composition layer 13 at a temperature of 250°C and a shear rate of 100 s⁻¹ is preferably 400 Pa.S or more, and more preferably 800 Pa.S or more. On the other hand, the upper limit is preferably 3000 Pa.S or less, more preferably 2000 Pa.S or less, and even more preferably 1500 Pa.S or less.

In order to set the melting viscosity of the resin contained in the first and second resin-impregnated fiber sheets 11 and 12 at a temperature of 250°C and a shear rate of 100 s⁻¹ to be lower than the melting viscosity of the resin contained in the resin composition layer 13 under the same conditions (i.e., melting viscosity at a temperature of 250°C and a shear rate of 100 s⁻¹) as mentioned above, a configuration as described below can be applied. That is, the above-described relationship can be realized by using polypropylene with a high number-average molecular weight and polypropylene with a low number-average molecular weight in the resin-impregnated sheets and the resin composition layer, respectively.

More specifically, an example of the resin contained in the first and second resin-impregnated fiber sheets 11 and 12 is polypropylene J106G (the melting viscosity at a temperature of 250°C and a shear rate of 100 s⁻¹ is 200 Pa.S) manufactured by Prime Polymer Co., Ltd.

In addition, a specific example of the resin contained in the resin composition layer 13 is polypropylene J111G (the melting viscosity at a temperature of 250°C and a shear rate of 100 s⁻¹ is 1000 Pa.S) manufactured by Prime Polymer Co., Ltd.

In the first embodiment, carbon fibers having a fiber density of 100 g/m² were used as the first fibers, carbon fibers having a fiber density of 20 g/m² were used as the second fibers, and the first and second resin-impregnated fiber sheets 11 and 12 impregnated with polypropylene J106G manufactured by Prime Polymer Co., Ltd. and the resin composition layer 13 made of polypropylene J111G manufactured by Prime Polymer Co., Ltd were used to produce a sheet having the configuration shown in FIG. 1. As a result, it was revealed that the sheet had excellent rigidity and excellent shock resistance.

In the present invention, the plurality of linear protruding portions 2 (e.g., ribs) are formed extending in parallel with one another (they may be formed extending substantially in parallel with one another), thus making it possible to improve the strength in this direction. However, the number of linear protruding portions may be one. That is, in some cases, the sheet is formed in a form having a single linear protruding portion 2 and is applicable as a strip. In this case, a fiber-reinforced sheet having a single linear protruding portion 2 may be obtained by cutting a fiber-reinforced sheet having a plurality of linear protruding portions 2. Even in a case of the sheet having a single linear protruding portion 2, impregnating, with resin or an adhesive, the above-mentioned fiber bundle that has not been impregnated with resin or the above-mentioned fiber bundle that has been partially impregnated with resin makes it possible to firmly attach this sheet to another strip (a metal strip, fiber-reinforced plastic strip, or the like) and use the obtained product. The protruding portions 2 do not necessarily need to be formed in a linear shape, and may take the form of lump or the like, which is not a linear shape.

### 1-6. Applications

The above-mentioned sheet 1 can be attached to an attachment target and used in various applications. The sheet 1 can be used in a windmill blade, an aircraft, a ship, a vehicle, a floorboard for an architectural structure, a roof material, a pipe, and the like. The sheet 1 can be favorably used in a windmill blade and a reinforcement for a ship. The sheet can also be used as a water sealing plate or a reinforcing member for a natural gas pipeline.

### Windmill blade

It is preferable that the above-mentioned sheet 1 is used in a windmill blade from the viewpoint of shock resistance and rigidity. A preferable embodiment of a windmill blade includes a windmill blade main body and a fiber resin portion formed of the sheet 1. Specifically, in this windmill blade, the above-mentioned fiber resin portion is attached to the surface of the above-mentioned windmill blade main body. From the viewpoint of effectively suppressing separation of the fiber resin portion, it is preferable to attach the sheet 1 to the surface of the windmill blade main body via an adhesive or resin in order to bond the sheet 1 to the windmill blade main body in the above-mentioned windmill blade.

### Member for ship

A hat structure is used as a structure for reinforcing the body (hull) of a ship. The hat structure is a configuration in which an outer plate forming the body of a ship is integrally provided with a plurality of projections having a rectangular cross section. Using this sheet for reinforcing a portion where the outer plate and the projections are connected in such a ship or using this sheet in a bottom portion of such a ship makes it possible to maintain stable strength for a long period of time and is thus preferable.

### 2. Second embodiment

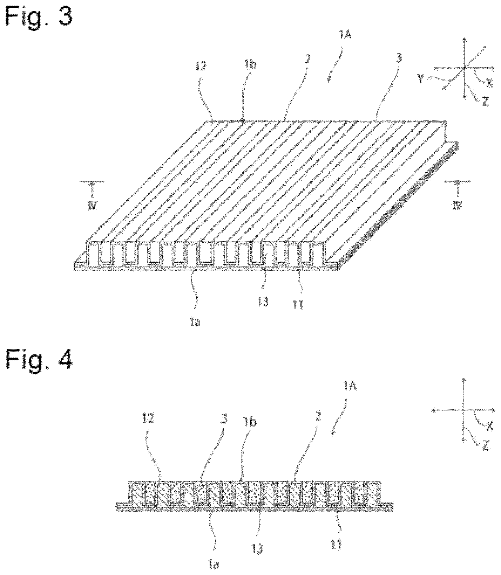

Next, a second embodiment of the sheet according to the present invention will be described with reference to FIGS. 3 and 4. FIG. 3 is a schematic perspective view of a sheet according to the second embodiment. FIG. 4 is a schematic cross-sectional view taken along line IV-IV in FIG. 3. It should be noted that the differences between the second embodiment and the first embodiment will mainly be described hereinafter. Therefore, the description of the same configurations as those of the first embodiment will be omitted unless otherwise stated. The same applies to third to seventh embodiments, which will be described later.

In the first embodiment, an example in which space is formed between the protruding portions 2 adjacent to each other in the x axis direction is described. In contrast, in a sheet 1A according to the second embodiment, as shown in FIGS. 3 and 4, foam 3 is arranged between the linear protruding portions 2 adjacent to each other in the x axis direction to be in contact with the liner protruding portions 2. Providing the foam 3 makes it possible to improve the rigidity of the sheet 1A.

The foam 3 may include open cells, but it is preferable that the foam 3 includes closed cells. Providing the foam 3 including closed cells makes it possible to realize a sheet 1A having a specific gravity that is smaller than that of water. The porosity of the foam 3 is preferably 20 vol% to 95 vol%, and more preferably 40 vol% to 85 vol%, for example. When the porosity of the foam 3 is excessively high, an increase in the shock resistance may be insufficient. On the other hand, when the porosity of the foam 3 is excessively low, a reduction in the specific gravity may be insufficient, and thus the molded article is not provided with sufficient buoyant force.

Although there is no particular limitation on the material of the foam 3, it is preferable that the foam 3 includes at least one type of resin selected from polyethylene resin, polypropylene resin, polystyrene resin, polyurethane resin, polyacrylic resin, and the like, for example.

In this embodiment, the foam 3 includes closed cells, and therefore, water is less likely to infiltrate the foam 3. The sheet 1A of this embodiment can be used on water or in water. For example, the sheet 1A can be used as a freestanding-type water sealing plate.

It should be noted that the foam 3 may be joined to the protruding portions 2 or may not be joined to the protruding portions 2. The foam 3 may be fitted to a recessed portion between the protruding portions 2 adjacent to each other in the x axis direction.

In this embodiment, an example in which the surface of the foam 3 having a rectangular lateral cross section and the surface of the protruding portion 2 having a rectangular lateral cross section are flush with each other. However, the present invention is not limited to this configuration. For example, the surface of the protruding portion 2 having a rectangular lateral cross section may be located outward or on the first main surface 1a side with respect to the surface of the foam 3 having a rectangular lateral cross section in the z axis direction.

### 3. Third embodiment

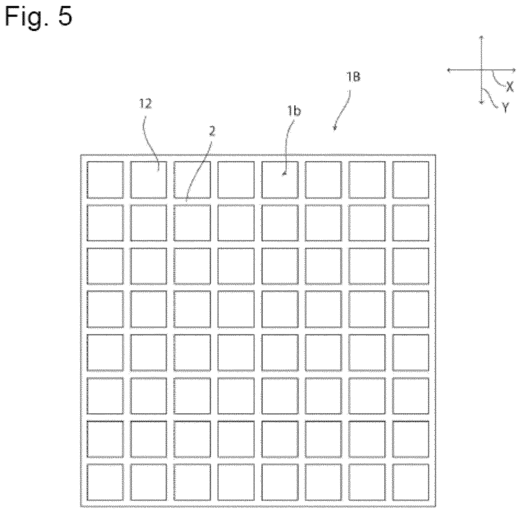

FIG. 5 is a schematic plan view of a sheet according to a third embodiment.

In the first embodiment, an example in which the protruding portions 2 are formed as linear protruding portions is described. However, the present invention is not limited to this configuration. In a sheet 1B shown in FIG. 5, the protruding portions 2 are provided to form a lattice. Providing the protruding portions 2 to form a lattice makes it possible to improve both the strength in the x axis direction and the strength in the y axis direction. Therefore, a sheet 1B with high rigidity can be realized.

### 4. Fourth embodiment

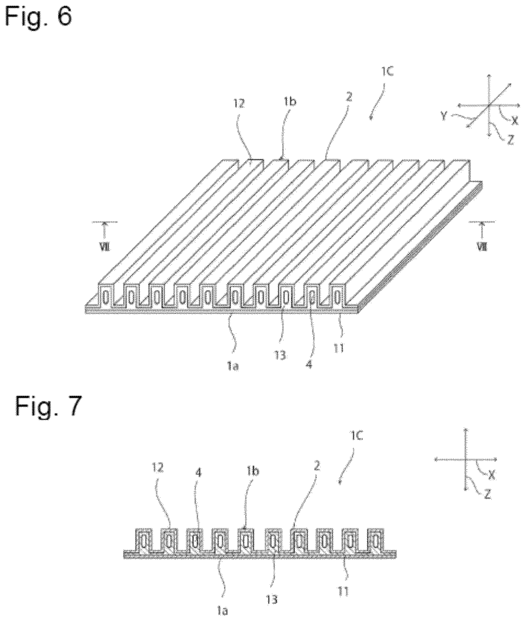

FIG. 6 is a schematic perspective view of a sheet according to a fourth embodiment. FIG. 7 is a schematic cross-sectional view taken along line VII-VII in FIG. 6.

In the first embodiment, an example in which the protruding portions 2 are filled by the resin composition layer 13 is described. In other words, an example in which the protruding portions 2 are made solid with the resin composition layer 13 is described. However, the present invention is not limited to this configuration. For example, as shown in FIGS. 6 and 7, a cavity 4 located inside the resin composition layer 13 may be formed in each protruding portion 2. In a sheet 1C according to this embodiment, the cavities 4 have an elongated shape extending in the y axis direction, which is the extension direction of the protruding portions 2. Specifically, the cavities 4 are formed passing through the linear protruding portion 2 extending in the y axis direction from one end to the other end in the y axis direction.

Forming the cavities 4 as in this embodiment makes it possible to reduce the specific gravity of the sheet 1C. Therefore, the sheet 1C is likely to function as a freestanding-type water sealing plate, for example. In addition, the heat insulating properties of the sheet 1C as a whole can be improved. Moreover, the light transmittance of the sheet 1C can be improved.

It should be noted that the sheet 1C may be provided with tubes for forming partitioned cavities 4 inside the resin composition layer 13.

There is no particular limitation on the shape of the cavities 4. The cavities 4 may have a lateral cross section having a circular shape, an elliptic shape, an elongated circular shape, a triangular shape, a quadrilateral shape, a polygonal shape, or the like. The cavities 4 do not necessarily reach the end surfaces of each protruding portion 2. Both ends of the cavity 4 in the y axis direction may be blocked by the resin composition layer 13.

It should be noted that the sheet 1C in which the cavities 4 are formed can be molded with tubes being arranged between a plurality of resin sheets when a laminate in which the first resin-impregnated fiber sheet 11, a plurality of resin sheets, and the second resin-impregnated fiber sheet 12 are layered is formed through extrusion molding, for example. Furthermore, for example, the sheet 1C can be molded by separating press molds after a laminate of the first resin-impregnated fiber sheet 11, a resin sheet, and the second resin-impregnated fiber sheet 12 are pressed, and moving the first resin-impregnated fiber sheet 11 and the second resin-impregnated fiber sheet 12 apart.

### 5. Fifth embodiment

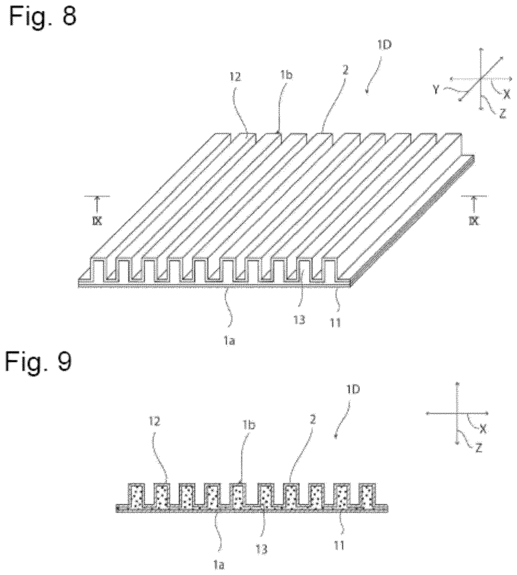

FIG. 8 is a schematic perspective view of a sheet according to a fifth embodiment. FIG. 9 is a schematic cross-sectional view taken along line IX-IX in FIG. 8.

As shown in FIGS. 8 and 9, in a sheet 1D according to this embodiment, at least portions of the resin composition layer 13 that are located inside the protruding portions 2 are formed of foam. Therefore, the sheet 1D has a low density.

Specifically, in the sheet 1D, the entire resin composition layer 13 is formed of foam. Therefore, the sheet 1D has a lower density.

When at least a portion of the resin composition layer 13 is formed of foam, it is preferable that the resin composition layer 13 includes resin such as polyethylene resin, polypropylene resin, polystyrene resin, polyurethane resin, or polyacrylic resin. The resin composition layer 13 may include only one of these types of resins or a plurality of types of resins.

### 6. Sixth embodiment

Next, a sixth embodiment of the sheet according to the present invention will be described. A sheet according to the sixth embodiment has the same laminated structure as that of the sheet according to the first embodiment. Specifically, as shown in FIGS. 1 and 2, the sheet according to the sixth embodiment includes the first resin-impregnated fiber sheet 11, the second resin-impregnated fiber sheet 12, and the resin composition layer 13. The sheet 1 is a laminate of the first resin-impregnated fiber sheet 11, the resin composition layer 13, and the second resin-impregnated fiber sheet 12. The external appearance is also substantially the same, and the first main surface 1a and the second main surface 1b are provided. The first main surface 1a is flat, whereas the second main surface 1b includes a plurality of linear protruding portions 2 extending in the y axis direction. Each of the plurality of linear protruding portions 2 is provided extending from one end of the second main surface 1b to the other end in the y axis direction. Hereinafter, the differences between the sheet according to the sixth embodiment and the sheet according to the first embodiment will mainly be described with reference to FIGS. 1 and 2. The manufacturing method is also substantially the same as that in the first embodiment, and therefore, the description thereof is omitted.

As mentioned above, the sheet according to the sixth embodiment has a structure shown in FIGS. 1 and 2. However, the sheet according to the sixth embodiment is different from the sheet according to the first embodiment in the following points.

### 6-1. First resin-impregnated fiber sheet 11

The first resin-impregnated fiber sheet 11 contains fibers extending in directions that are different from one another. Specifically, the first resin-impregnated fiber sheet 11 contains first fibers extending in a first direction and second fibers extending in a direction that is different from the first direction. Specifically, in this embodiment, the first resin-impregnated fiber sheet 11 contains the first fibers extending in the y axis direction (first direction) and the second fibers extending in the x axis direction (second direction), which is orthogonal to the y axis direction. A first fiber density extending in the y axis direction, which is the extension direction of the linear protruding portions 2, is higher than the fiber density of the second fibers extending in the x axis direction, which is orthogonal to the extension direction of the linear protruding portions 2.

### 6-2. Features

As described above, the sheet 1 is provided with the linear protruding portions 2 extending in the first direction (y axis direction) . Therefore, the sheet 1 has high rigidity in the first direction (y axis direction). In addition, in the sheet 1, the first resin-impregnated fiber sheet 11 contains the first fibers extending in the first direction and the second fibers extending in the second direction, which is different from the first direction, and the fiber density of the first fibers is higher than the fiber density of the second fibers. Therefore, the rigidity in the first direction (y axis direction) is further improved. It should be noted that the first direction in which the first fibers extend is not necessarily orthogonal to the second direction in which the second fibers extend, and need only extend in a direction that is different from the second direction and intersect the second direction.

On the other hand, the fiber density of the second fibers is lower than the fiber density of the first fibers, and therefore, the flexibility in the second direction (x axis direction), which is inclined to (typically, orthogonal to) the first direction (y axis direction), is high. Accordingly, the sheet 1 has low rigidity in the x axis direction and can thus be rolled up.

As described above, the fiber density of the first fibers is higher than the fiber density of the second fibers, and therefore, the sheet 1 has high rigidity in the first direction (y axis direction) and can be rolled up.

The fiber density of the first fibers is generally 50 g/m² or more, preferably 75 g/m² or more, and more preferably 100 g/m² or more. On the other hand, the upper limit is generally 1000 g/m² or less, preferably 700 g/m² or less, more preferably 500 g/m² or less, even more preferably 300 g/m² or less, and particularly preferably 150 g/m² or less.

The fiber density of the second fibers is generally 1 g/m² or more, preferably 5 g/m² or more, and more preferably 10 g/m² or more. On the other hand, the upper limit is generally 100 g/m² or less, preferably 75 g/m² or less, and more preferably 50 g/m² or less.

In the sixth embodiment, carbon fibers having a fiber density of 100 g/m² were used as the first fibers, carbon fibers having a fiber density of 20 g/m² were used as the second fibers, and the first and second resin-impregnated fiber sheets 11 and 12 impregnated with polypropylene J106G manufactured by Prime Polymer Co., Ltd. and the resin composition layer 13 made of polypropylene J111G manufactured by Prime Polymer Co., Ltd were used to produce the sheet shown in FIG. 1. As a result, it was revealed that the sheet had excellent rigidity and excellent shock resistance.

When the fiber density of the first fibers is taken as A and the fiber density of the second fibers is taken as B, A/B is preferably 1.1 or more, and more preferably 2.0 or more, from the viewpoint of further improving the rigidity of the sheet 1 in the y axis direction. However, when A/B is excessively large, there is a risk that the tensile strength in the x axis direction will deteriorate. Therefore, A/B is preferably 9.0 or less, and more preferably 5.0 or less.

From the viewpoint of further improving the rigidity of the sheet 1 in the y axis direction, it is preferable that the flexural strength of the first fibers is higher than the flexural strength of the second fibers. The flexural strength of the first fibers is higher than the flexural strength of the second fibers preferably by a factor of 1.1 or more, and more preferably by a factor of 2.0 or more. However, when the first fibers have an excessively high flexural strength, the tensile strength in the x axis direction may deteriorate. Therefore, the flexural strength of the first fibers is higher than the flexural strength of the second fibers preferably by a factor of 9.0 or less, and more preferably by a factor of 5.0 or less. An example of fibers having a high flexural strength is glass fibers, and therefore, it is preferable that the second fibers include glass fibers and the like.

From the viewpoint of further improving the rigidity of the sheet 1 in the x axis direction, it is preferable that the resin composition layer 13 is provided over the region in which a plurality of linear protruding portions 2 are provided, in the x axis direction. It is more preferable that the resin composition layer 13 is provided between one end and the other end of the sheet 1 in the x axis direction. That is, it is preferable that the resin composition layer 13 is provided continuously over the entire sheet 1 including the region in which the linear protruding portions 2 are provided. The reason for this is that, when the resin composition layer 13 is also provided at portions located between the linear protruding portions 2, the rigidity of the portions located between the linear protruding portions 2 can be improved.

### 7. Seventh embodiment

A sheet according to a seventh embodiment has substantially the same external appearance as that of the above-described sheet according to the fifth embodiment, and the configurations of the first resin-impregnated fiber sheet 11, the second resin-impregnated fiber sheet 12, and the resin composition layer 13 are the same as those in the sixth embodiment. Therefore, the sheet according to the seventh embodiment will be described with reference to FIGS. 8 and 9 hereinafter.

As shown in FIGS. 8 and 9, in a sheet 1D according to this embodiment, at least portions of the resin composition layer 13 that are located inside the protruding portions 2 are formed of foam. Therefore, the sheet 1D has a low density.

Specifically, in the sheet 1D, the entire resin composition layer 13 is formed of foam. Therefore, the sheet 1D has a lower density and is light.

When at least a portion of the resin composition layer 13 is formed of foam, it is preferable that the resin composition layer 13 includes a resin such as polyethylene resin, polypropylene resin, polystyrene resin, polyurethane resin, or polyacrylic resin. The resin composition layer 13 may include only one of these types of resins or a plurality of types of resins .

### B. Rod-shaped member

Hereinafter, favorable embodiments of a rod-shaped member according to the present invention will be described. However, the following embodiments are merely examples. The present invention is not limited to the following embodiments.

In the diagrams that are referred to in the embodiments and the like, members having substantially the same function are denoted by the same reference numeral. The diagrams that are referred to in the embodiments and the like are shown schematically. The ratios of the dimensions of the articles shown in the diagrams may be different from the ratios of the dimensions of the actual articles. The ratios of the dimensions of the articles shown in the diagrams may be different one another. Specific ratios of the dimensions of the articles should be determined in consideration of the following description.

### 1. First embodiment

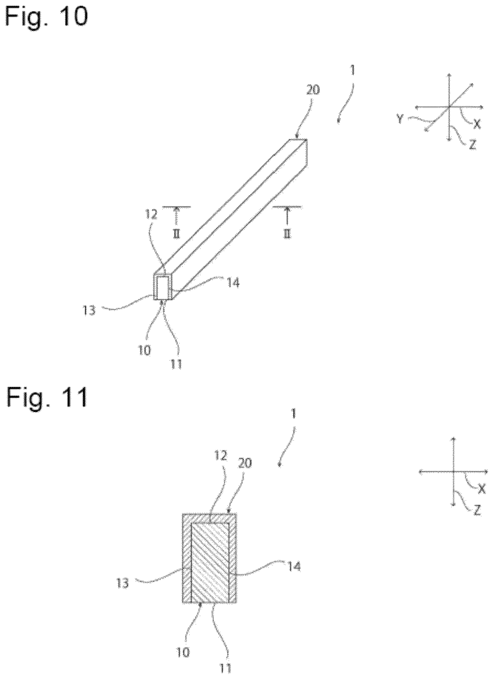

FIG. 10 is a schematic perspective view of a first embodiment of a rod-shaped member. FIG. 11 is a schematic cross-sectional view taken along line II-II in FIG. 11.

A rod-shaped member 1 shown in FIGS. 10 and 11 is a rod-shaped member that can be used as a beam or the like that is to be attached to a plate member or the like such as a resin plate, a wood plate, or a metal plate to reinforce the plate member. Similarly to the above-mentioned sheet 1, the rod-shaped member 1 can be attached to an attachment target and used in various applications. For example, the rod-shaped member 1 is attached to an attachment target such as a windmill blade, an aircraft, a ship, a vehicle, a floorboard for an architectural structure, a roof material, or a pipe and is used to reinforce it.

The rod-shaped member 1 includes a main body 10 and a resin-impregnated fiber sheet 20. The individual members will be described below.

### 1-1. Main body 10

The main body 10 is a rod-shaped member including an installation surface 11 to be attached to a plate member. Specifically, in this embodiment, the main body 10 has a prismatic shape having a rectangular lateral cross section. The main body 10 includes four lateral sides, namely a lateral side forming the installation surface 11, a first lateral side 12, a second lateral side 13, and a third lateral side 14. The first lateral side 12 faces the installation surface 11. The second lateral side 13 faces the third lateral side 14.

It should be noted that the corner portions and the ridge portions of the main body 10 may be beveled or rounded.

The installation surface may be flat or curved.

The main body 10 is not necessarily formed in a linear shape . For example, the main body 10 may also be formed in a curved shape.

The main body 10 may be made of only resin or a resin composition containing fibers, a filler and the like. When the main body 10 contains fibers and a filler, the main body 10 can be provided with various functions. For example, when the main body 10 contains chopped fibers or the like, the strength of the main body 10 can be improved, and the strength of the rod-shaped member 1 can be thus improved. It should be noted that fibers obtained when pieces of the resin-impregnated fiber sheets 20 are chopped into fine pieces may be used as the chopped fibers, for example.

Although there is no particular limitation on the resin contained in the main body 10, examples thereof include polyethylene resin, polypropylene resin, nylon resin, polymethacrylic resin, and polyvinyl chloride resin, and it is preferable to use polypropylene resin or a polypropylene copolymer from the viewpoint of the shock resistance. These types of resins may be used alone as the resin contained in the main body 10, or a mixture of a plurality of types of resins may be used.

### 1-2. Resin-impregnated fiber sheet 20

The resin-impregnated fiber sheet 20 is joined to at least one lateral side of the main body 10 other than the installation surface 11. Specifically, in this embodiment, the resin-impregnated fiber sheet 20 is joined to the first to third lateral sides 12 to 14. Therefore, the strength and shock resistance of the rod-shaped member 1 are further improved. More specifically, in this embodiment, a single resin-impregnated fiber sheet 20 is provided to three lateral sides, namely the second lateral side 13, the first lateral side 12, and the third lateral side 14. In other words, in this embodiment, a single resin-impregnated fiber sheet 20 is provided spanning from the second lateral side 13 to the third lateral side 14 via the first lateral side 12. Therefore, the strength and shock resistance of the rod-shaped member 1 are further improved.

However, in the present invention, the number of resin-impregnated fiber sheets 20 is not necessarily one. A plurality of resin-impregnated fiber sheets may be joined to the main body. For example, a resin-impregnated fiber sheet joined to the first lateral side 12, a resin-impregnated fiber sheet joined to the second lateral side, and a resin-impregnated fiber sheet joined to the third lateral side may also be provided. The resin-impregnated fiber sheet 20 may be formed of a laminate of a plurality of resin-impregnated fiber sheets.

The resin-impregnated fiber sheet 20 is a fiber sheet impregnated with resin, and a sheet that is similar to the first resin-impregnated sheet 11 described in the above-mentioned first embodiment of the sheet can be used as the resin impregnated fiber sheet 20. Therefore, the differences between the resin-impregnated fiber sheet 20 and the above-mentioned first resin-impregnated sheet 11 will mainly be described hereinafter. It is preferable that the resin-impregnated fiber sheet 20 is a sheet containing fibers extending in the y axis direction, which is the extension direction of the main body 10. The reason for this is that, in this case, the strength of the rod-shaped member 1 in the y axis direction, the shock resistance of the rod-shaped member 1, and the like can be improved. From the viewpoint of further improving the strength of the rod-shaped member 1 in the y axis direction and the shock resistance of the rod-shaped member 1, it is preferable that the resin-impregnated fiber sheet 20 contains fibers extending from one end of the resin-impregnated fiber sheet 20 to the other end in the y axis direction.

A method for manufacturing the rod-shaped member 1 will be specifically described later. When the rod-shaped member 1 is manufactured through press molding, for example, it is preferable to use, as the resin-impregnated fiber sheet 20, a unidirectional woven fabric containing fibers extending in the y axis direction, which is the extension direction of the main body 10. In this case, it is preferable to use fibers made of a thermoplastic resin, such as polyethylene fibers or polypropylene fibers, for a small amount of weft yarns that are used in a unidirectional woven fabric. When a unidirectional woven fabric using weft yarns made of such a resin is used, the unidirectional woven fabric is likely to deform during heat press molding. Therefore, press molding can be easily performed. When the rod-shaped member 1 is manufactured through extrusion molding, for example, the resin-impregnated fiber sheet 20 may be constituted by a unidirectional woven fabric, or a plain woven fabric, a twill woven fabric, or a sateen woven fabric or the like that contains fibers extending in the x axis direction.

The main body 10 and the resin-impregnated fiber sheet 20 may be light transmissive. In this case, a light transmissive rod-shaped member 1 can be obtained. The light transmissive rod-shaped member 1 is favorably used at positions at which lighting is required and the like, for example.

It should be noted that an example in which the installation surface 11 of the main body 10 is exposed is described in this embodiment. However, the present invention is not limited to this configuration. For example, another member may be bonded or joined to the installation surface 11. Specifically, a fiber sheet that has not been impregnated with resin or a fiber sheet that has been partially impregnated with resin may be bonded or joined to the installation surface 11, for example.

### 1-3. Method for manufacturing rod-shaped member 1

Various methods can be used to manufacture the rod-shaped member 1. For example, the rod-shaped member 1 can be molded through heat pressing, extrusion molding, or the like.

When the rod-shaped member 1 is manufactured through heat pressing, extrusion molding, or the like, the main body 10 or the resin-containing member for forming the main body 10 needs to be melted temporarily. Therefore, the main body 10 or the resin-containing member needs to be heated to a temperature that is higher than or equal to a temperature at which the main body 10 or the resin-containing member melts . The temperature at which the main body 10 or the resin-containing member melts varies depending on the material of the main body 10 or the resin-containing member, and, in general, it is preferable to heat the main body 10 or the resin-containing member to about 250°C during molding.

### 1-4. Features

With the rod-shaped member as mentioned above, space is sometimes formed inside the main body, or the shock resistance of the obtained rod-shaped member may deteriorate when the adhesion between the resin-impregnated fiber sheet and the main body is low. To address this, the rod-shaped member according to this embodiment is configured as described below.

In this embodiment, the melting viscosity of the resin contained in the resin-impregnated fiber sheet 20 at a temperature of 250°C and a shear rate of 100 s⁻¹ is lower than the melting viscosity of the resin contained in the main body 10 under the same conditions (i.e., melting viscosity at a temperature of 250°C and a shear rate of 100 s⁻¹). In this case, the adhesion between the resin-impregnated fiber sheet 20 and the main body 10 can be improved, and space or the like is less likely to be formed inside the main body 10. Therefore, a rod-shaped member 1 with excellent shock resistance can be realized. As a result, the rod-shaped member 1 of this embodiment can be favorably used as a beam and the like, for example.

From the viewpoint of further improving the shock resistance of the rod-shaped member 1, the melting viscosity of the resin contained in the resin-impregnated fiber sheet 20 at a temperature of 250°C and a shear rate of 100 s⁻¹ is preferably 300 Pa.S or more and more preferably 500 Pa.S lower than the melting viscosity of the resin contained in the main body 10 under the same conditions. However, if the melting viscosity of the resin contained in the resin-impregnated fiber sheet 20 at a temperature of 250°C and a shear rate of 100 s⁻¹ is excessively lower than the melting viscosity of the resin contained in the main body 10 under the same conditions, the shock resistance may deteriorate. Therefore, the melting viscosity of the resin contained in the resin-impregnated fiber sheet 20 at a temperature of 250°C and a shear rate of 100 s⁻¹ is preferably 100 Pa.S or more, and more preferably 200 Pa.S or more. On the other hand, the upper limit is preferably 600 Pa.S or less, more preferably 400 Pa.S or less, and even more preferably 300 Pa.S or less.

The melting viscosity of the resin contained in the main body 10 at a temperature of 250°C and a shear rate of 100 s⁻¹ is preferably 400 Pa.S or more, and more preferably 800 Pa.S or more. On the other hand, the upper limit is preferably 3000 Pa.S or less, more preferably 2000 Pa.S or less, and even more preferably 1500 Pa.S or less.

In order to set the melting viscosity of the resin contained in the resin-impregnated fiber sheet 20 at a temperature of 250°C and a shear rate of 100 s⁻¹ to be lower than the melting viscosity of the resin contained in the main body 10 under the same conditions (i.e., melting viscosity at a temperature of 250°C and a shear rate of 100 s⁻¹), it is sufficient that polypropylene with a high number-average molecular weight and polypropylene with a low number-average molecular weight are used in the resin-impregnated sheet 20 and the main body 10, respectively.

More specifically, an example of the resin contained in the resin-impregnated fiber sheet 20 is polypropylene J106G (the melting viscosity at a temperature of 250°C and a shear rate of 100 s⁻¹ is 200 Pa.S) manufactured by Prime Polymer Co., Ltd.

In addition, a specific example of the resin contained in the main body 10 is polypropylene J111G (the melting viscosity at a temperature of 250°C and a shear rate of 100 s⁻¹ is 1000 Pa.S) manufactured by Prime Polymer Co., Ltd.

The resin-impregnated fiber sheet 20 was manufactured using carbon fibers having a fiber density of 20 g/m² and polypropylene J106G manufactured by Prime Polymer Co., Ltd., and the main body was manufactured using polypropylene J111G manufactured by Prime Polymer Co., Ltd. This resin-impregnated fiber sheet 20 and the main body 10 were used to produce a rod-shaped member 1 shown in FIG. 10. As a result, it was revealed that the rod-shaped member 1 had excellent rigidity and excellent shock resistance.

### 2. Second embodiment

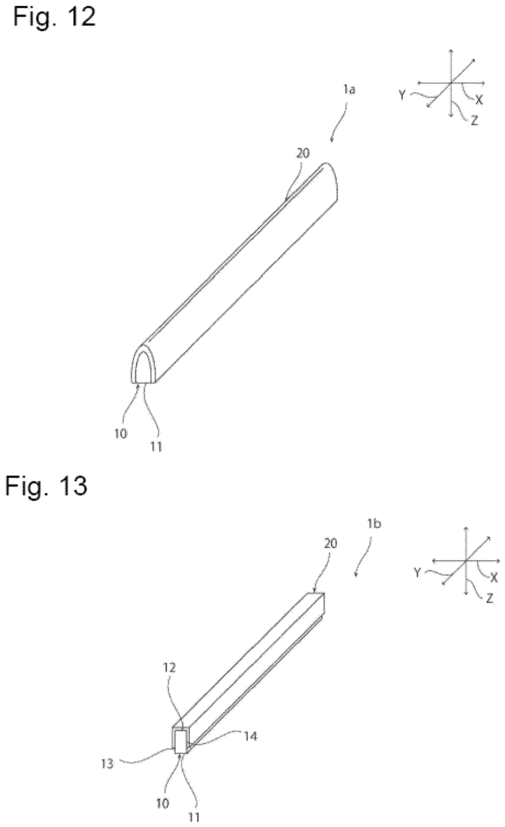

Next, a second embodiment of the rod-shaped member according to the present invention will be described with reference to FIG. 12. FIG. 12 is a schematic perspective view of a rod-shaped member according to the second embodiment. It should be noted that the differences between the second embodiment and the first embodiment will mainly be described hereinafter. Therefore, the description of the same configurations as those of the first embodiment will be omitted unless otherwise stated. The same applies to third to fifth embodiments, which will be described later.

In the first embodiment, an example in which the main body 10 has a prismatic shape. However, in the present invention, the main body is not limited to having a prismatic shape as long as the rod-shaped member includes an installation surface. For example, the main body 10 may be a columnar member having a dome-shaped lateral cross section as a rod-shaped member 1a shown in FIG. 12. Even in this case, high strength and good shock resistance can be realized as in the rod-shaped member 1 according to the first embodiment.

When the main body 10 has a dome-shaped lateral cross section, it is preferable that the resin-impregnated fiber sheet 20 is joined spanning a portion on one side and a portion on the other side with respect to the top of the main body 10 in the x axis direction, which is a width direction, as viewed in the y axis direction, which is the extension direction of the main body 10, from the viewpoint of realizing higher strength and better shock resistance.

### 3. Third embodiment

FIG. 13 is a schematic perspective view of a rod-shaped member according to a third embodiment.

In the first and second embodiments, an example in which all lateral sides of the main body 10 other than the installation surface 11 are joined to the fiber sheet 20 is described. Joining the resin-impregnated fiber sheet 20 to all lateral sides of the main body 10 other than the installation surface 11 in this manner makes it possible to realize better shock resistance.

However, the present invention is not limited to this configuration. For example, as in a rod-shaped member 1b shown in FIG. 13, the resin-impregnated fiber sheet 20 may be joined to at least one of the lateral sides of the main body 10 other than the installation surface. Also in this case, it is preferable that the resin-impregnated fiber sheet 20 is provided over the second lateral side 13, the first lateral side 12, and the third lateral side 14 from the viewpoint of realizing high strength and excellent shock resistance. When the main body 10 has a dome-shaped lateral cross section, it is preferable that the resin-impregnated fiber sheet 20 is joined spanning a portion on one side and a portion on the other side with respect to the top of the main body 10 in the x axis direction, which is a width direction, as viewed in the y axis direction, which is the extension direction of the main body 10.

### 4. Fourth embodiment

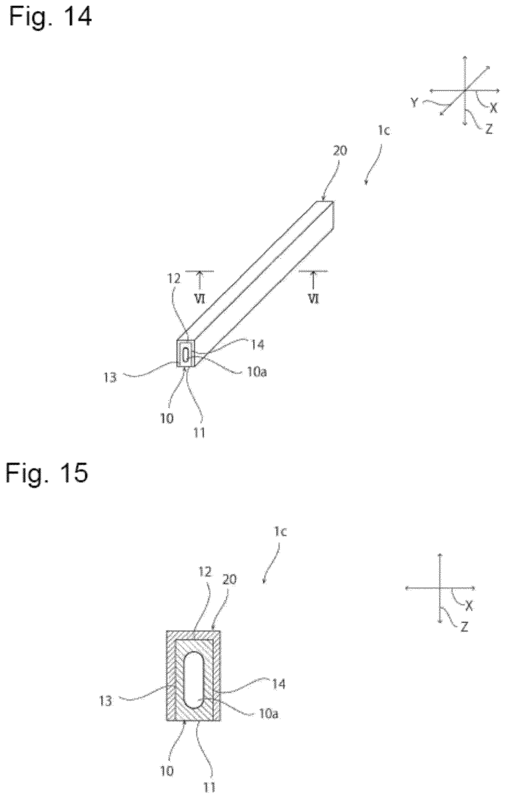

FIG. 14 is a schematic perspective view of a rod-shaped member according to a fourth embodiment. FIG. 15 is a schematic cross-sectional view taken along line VI-VI in FIG. 14.

In the first to third embodiments, an example in which the main body 10 is solid is described. However, the present invention is not limited to this configuration. For example, as shown in FIGS. 14 and 15, a cavity 10a may be formed inside the main body 10. In a rod-shaped member 1c according to this embodiment, the cavity 10a has an elongated shape extending in the y axis direction, which is the extension direction of the main body 10. Specifically, the cavity 10a is formed passing through the linear main body 10 extending in the y axis direction from one end to the other end in the y axis direction.

Forming the cavity 10a as in this embodiment makes it possible to reduce the specific gravity of the rod-shaped member 1c. Moreover, forming the cavity 10a makes it possible to improve the light transmittance of the rod-shaped member 1c.

It should be noted that the rod-shaped member 1c is provided with a tube for forming a partitioned cavity 10a inside the main body 10.

There is no particular limitation on the shape of the cavity 10a. The cavity 10a may have a lateral cross section having a circular shape, an elliptical shape, an elongated circular shape, a triangular shape, a quadrilateral shape, a polygonal shape, or the like.

The cavity 10a does not necessarily reach the end surfaces of the main body 10. At least one of the ends of the cavity 10a in the y axis direction may be blocked.

It should be noted that the rod-shaped member 1c in which the cavity 10a is formed can be molded with tubes being arranged between a plurality of resin-containing members when a laminate in which the resin-impregnated fiber sheet 20 and a plurality of resin-containing members are layered is formed through extrusion molding, for example. Furthermore, for example, the rod-shaped member 1c can be molded by separating a pair of press molds after a laminate of the resin-impregnated fiber sheet 20 and the resin-containing member are pressed, and moving the pair of press molds apart.

### 5. Fifth embodiment

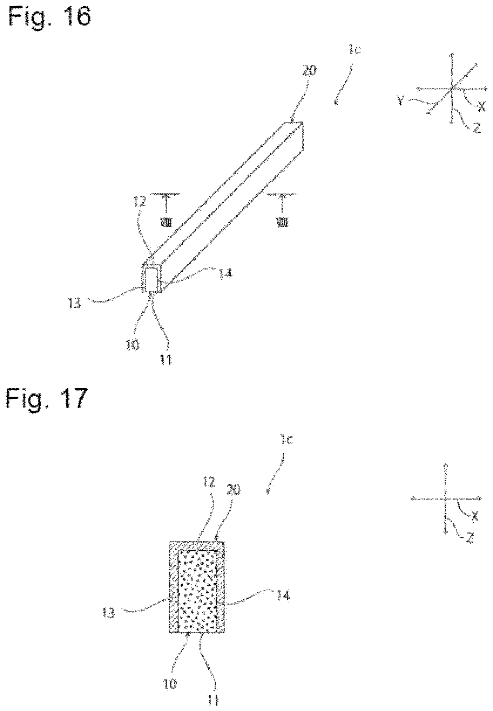

FIG. 16 is a schematic perspective view of a rod-shaped member according to a fifth embodiment. FIG. 17 is a schematic cross-sectional view taken along line IX-IX in FIG. 16.

As shown in FIGS. 16 and 17, in the rod-shaped member 1c according to this embodiment, the main body 10 is formed of foam. Therefore, the rod-shaped member 1c has a low density.

When the main body 10 is formed of foam, it is preferable that the main body 10 includes resin such as polyethylene resin, polypropylene resin, polystyrene resin, polyurethane resin, or polyacrylic resin. The main body 10 may include only one of these types of resins or a plurality of types of resins.

### Reference Signs List

- FIGS. 1 to 9
   - 1, 1A, 1B, 1C, 1D: Sheet
   - 1a: First main surface
   - 1b: Second main surface
   - 2: Protruding portion
   - 3: Foam
   - 4: Cavity
   - 11: First resin-impregnated fiber sheet
   - 12: Second resin-impregnated fiber sheet
   - 13: Resin composition layer
- FIGS. 10 to 17
   - 1a, 1b, 1c:: Rod-shaped member
   - 10:: Main body
   - 10a:: Cavity
   - 11:: Installation surface
   - 12:: First lateral side
   - 13:: Second lateral side
   - 14:: Third lateral side
   - 20:: Resin-impregnated fiber sheet

## Claims

1. A sheet including a first main surface and a second main surface having at least one protruding portion, the sheet comprising:
a first resin-impregnated fiber sheet forming the first main surface;
a second resin-impregnated fiber sheet forming the second main surface; and
a resin composition layer filling space between the first resin-impregnated fiber sheet and the second resin-impregnated fiber sheet.

2. The sheet according to claim 1, wherein a melting viscosity of resin contained in the first and second resin-impregnated fiber sheets at a temperature of 250°C and a shear rate of 100 s⁻¹ is lower than a melting viscosity of resin contained in the resin composition layer under the same conditions.

3. The sheet according to claim 2, wherein the melting viscosity of the resin contained in the first and second resin-impregnated fiber sheets at a temperature of 250°C and a shear rate of 100 s⁻¹ is 300 Pa.s or more lower than the melting viscosity of the resin contained in the resin composition layer under the same conditions.

4. The sheet according to claim 1,
wherein the protruding portion is formed extending in a first direction in a linear manner,
the first resin-impregnated fiber sheet includes:
first fibers extending in the first direction; and
second fibers extending in a second direction that is different from the first direction, and
a fiber density of the first fibers is higher than a fiber density of the second fibers.

5. The sheet according to claim 4, wherein, when the fiber density of the first fibers is taken as A and the fiber density of the second fibers is taken as B, A/B is 1.1 or more and 9.0 or less.

6. The sheet according to claim 4 or 5, wherein the second direction is orthogonal to the first direction.

7. The sheet according to any one of claims 1 to 6,
wherein resin contained in the first and second resin-impregnated fiber sheets includes at least one type of resin selected from the group consisting of polyethylene, polypropylene, a polypropylene copolymer, nylon resin, polymethacrylic resin, polyvinyl chloride resin, and polycarbonate resin, and
resin contained in the resin composition layer includes at least one type of resin selected from the group consisting of polyethylene, polypropylene, a polypropylene copolymer, nylon resin, polymethacrylic resin, polycarbonate resin, and polyvinyl chloride resin.

8. The sheet according to any one of claims 1 to 7, wherein the second resin-impregnated fiber sheet contains fibers extending in the first direction.

9. The sheet according to any one of claims 1 to 7, wherein the second resin-impregnated fiber sheet contains fibers extending in the second direction.

10. The sheet according to any one of claims 1 to 9, which is light transmissive.

11. The sheet according to any one of claims 1 to 10, wherein the resin composition layer contains fibers.

12. The sheet according to any one of claims 1 to 11, wherein the first and second resin-impregnated fiber sheets contain a thermoplastic resin.

13. The sheet according to any one of claims 1 to 12, wherein at least a portion of the resin composition layer that is located inside the protruding portion is formed of foam.

14. A rod-shaped member comprising:
a rod-shaped main body including an installation surface on a lateral side and is formed of a resin composition; and
a resin impregnated fiber sheet joined to at least one lateral side of the main body other than the installation surface,
wherein a melting viscosity of resin contained in the resin-impregnated fiber sheet at a temperature of 250°C and a shear rate of 100 s⁻¹ is lower than a melting viscosity of resin contained in the main body under the same conditions.

15. The rod-shaped member according to claim 14, wherein the resin-impregnated fiber sheet is joined to all of the lateral sides of the main body other than the installation surface.

16. The rod-shaped member according to claim 14 or 15,
wherein the main body has a prismatic shape having a rectangular lateral cross section, and
the resin-impregnated fiber sheet is joined to three of four lateral sides of the main body other than the lateral side forming the installation surface.
